**Europäisches Patentamt**

**European Patent Office**

**Office européen des brevets**

(19)

(11) Numéro de publication : **0 283 405 B1**

(12)

# FASCICULE DE BREVET EUROPEEN

(45) Date de publication du fascicule du brevet :
**11.09.91 Bulletin 91/37**

(51) Int. Cl.⁵ : **C09J 7/02**

(21) Numéro de dépôt : **88420044.5**

(22) Date de dépôt : **16.02.88**

(54) **Matériau en feuille comportant un adhésif sur ses deux faces.**

(30) Priorité : **27.02.87 FR 8702889**

(43) Date de publication de la demande :
**21.09.88 Bulletin 88/38**

(45) Mention de la délivrance du brevet :
**11.09.91 Bulletin 91/37**

(84) Etats contractants désignés :
**BE CH DE ES GB IT LI LU NL**

(56) Documents cités :
**CH-A- 510 103**
**US-A- 1 726 744**
**US-A- 2 565 509**
**US-A- 3 203 823**

(73) Titulaire : **DELAPORTE INDUSTRIES**
**Pont Authou**
**F-27290 Montfort sur Risle (FR)**

(72) Inventeur : **Saligny, Claude**
**35 chemin du Tronchon**
**F-69130 Ecully (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

EP 0 283 405 B1

## Description

La présente invention a trait à un nouveau type de matériau en feuille, utilisable comme intercalaire entre deux produits ou objets afin d'éviter qu'ils ne glissent l'un contre l'autre.

Elle a trait plus particulièrement à un matériau du type précité utilisable lors d'opérations de stockage et/ou transport sous forme d'empilement (palettes) d'articles divers et notamment de produits emballés sous forme de sacs et qui peuvent avoir tendance à glisser les uns par rapport aux autres.

La présente invention sera décrite pour une telle application mais il est évident que cela n'est pas limitatif et qu'un tel produit pourrait également être utilisé dans d'autres domaines et en général dans tous les cas où l'on souhaite éviter le glissement d'un objet par rapport à une surface sur laquelle ledit objet est posé et ce, en gardant la possibilité de pouvoir séparer facilement l'objet de ladite surface sans détérioration des faces en contact.

L'un des problèmes qui se posent dans le domaine du stockage et du transport des sacs de matières (ou produits similaires), est celui du maintien de l'empilement formé des sacs qui ont tendance à glisser les uns par rapport aux autres. Pour résoudre ce problème, diverses solutions ont été proposées telles que par exemple réalisation de caisses intermédiaires, renforcement des sacs, ces solutions donnant satisfaction mais étant de par leur nature très coûteuses.

Il a été également envisagé de réaliser une pulvérisation de colle sur les surfaces extérieures de telle sorte que lorsque les sacs sont empilés, ils se collent les uns aux autres. Le problème de l'empilement se trouve ainsi résolu de manière simple et efficace, mais il y a un risque important de destruction, de détérioration et/ou de salissure de la surface de l'emballage lorsque les sacs sont séparés les uns des autres.

Par suite, à ce jour, la solution la plus simple et la plus économique pour résoudre ce problème de la stabilité des empilements consiste à intercaler entre chaque sac un matériau en forme de feuille (papier) enduit superficiellement avec une composition de paraffine chargée d'élastomère, de telle sorte qu'il présente un coefficient de frottement suffisant par rapport aux sacs, empêchant tout glissement les uns par rapport aux autres. Un tel papier couramment désigné par l'expression "papier antigliss" est relativement délicat et coûteux à réaliser étant donné qu'il convient de réaliser un compromis tel qu'il ne se produise par un autocollage sous la charge de l'empilement ou lors de son enroulement pendant sa fabrication.

On connait également des papiers autocollants sur leurs deux faces qui pourraient être utilisés comme intercalaires, mais de tels matériaux impliquent, lors de leur fabrication et stockage, la présence d'un intercalaire entre chacune des couches. La présence d'un tel intercalaire augmente le coût de fabrication et nécessite une manipulation supplémentaire et la mise au rebut de ce papier intercalaire lors de l'utilisation du matériau.

Or on a trouvé et c'est ce qui fait l'objet de la présente invention, un nouveau type de matériau en feuille qui permet de surmonter ces inconvénients.

D'une manière générale, l'invention concerne donc un nouveau type de matériau en feuille utilisable notamment comme élément intercalaire entre deux surfaces de produits dont on souhaite empêcher tout glissement de l'un par rapport à l'autre, ledit matériau comportant sur ses deux faces une couche de matière adhésive déposée, sur chacune des faces de la feuille sous la forme de motifs couvrant moins de 50% de la surface totale de la feuille, et qui se caractérise en ce que les zones adhésives d'une face sont décalées par rapport aux zones adhésives réalisées sur l'autre face et ce, de telle sorte que lorsque les deux faces sont mises en contact l'une avec l'autre, lesdits motifs adhésifs puissent soit s'interpénétrer sans se toucher les uns par rapport aux autres, soit si deux zones adhésives sont en contact, elles ne le sont que de manière pratiquement ponctuelle, de telle sorte que les deux couches puissent être séparées l'une de l'autre très facilement.

Conformément à l'invention :

— la matière adhésive sera répartie sur les deux faces de la feuille soit sous la forme de bandes continues parallèles, longitudinales ou transversales, l'espacement entre les bandes d'une face étant légèrement supérieur à la largeur des bandes adhésives de l'autre face, soit sous la forme de motifs complémentaires tels que par exemple pastilles collantes circulaires, polygonales, les parties adhésives d'une face étant, comme dans le cas de bandes, disposées sous les parties non adhésives de l'autre face ;

— grâce à une telle alternance de parties adhésives et de parties non adhésives sur les deux faces du matériau, parties qui comme dit précédemment, sont décalées les unes par rapport aux autres, il est donc possible d'enrouler ladite feuille sur elle-même et ce, sans avoir à utiliser de feuilles intercalaires ;

— comme support, on utilisera tout matériau conventionnel tel que par exemple du papier kraft ;

— par ailleurs, les adhésifs seront des adhésifs de type connu, par exemple du type "colle acrylique" ; ils seront déposés par tout moyen approprié tel que pulvérisation, impression, enduction....

L'invention et les avantages qu'elle apporte seront cependant mieux compris grâce aux exemples de réalisation donnés ci-après à titre indicatif mais non limitatif, et qui sont illustrés par les schémas annexés qui illustrent schématiquement, en perspective, deux formes de réalisation d'un matériau conforme à l'invention.

Si l'on se reporte à ces deux figures, dans lesquelles les mêmes éléments sont désignés par les mêmes références, le matériau conforme à l'invention se compose, dans tous les cas, d'une feuille support (1), par exemple papier kraft conventionnel, feuille revêtue sur ses deux faces d'une composition adhésive déposée, par pulvérisation, impression.. de telle sorte que les zones adhésives (2a) de la face (1a) de la feuille soient séparées les unes des autres d'une zone (3a) ne comportant pas d'adhésif alors que l'autre face (1b) de la feuille (1) présente des zones adhésives (2b) séparées les une des autres par des zones non-adhésives (3b), lesdites zones adhésives (2b) étant disposées en dessous des zones (3a) sans adhésif de la face (1a).

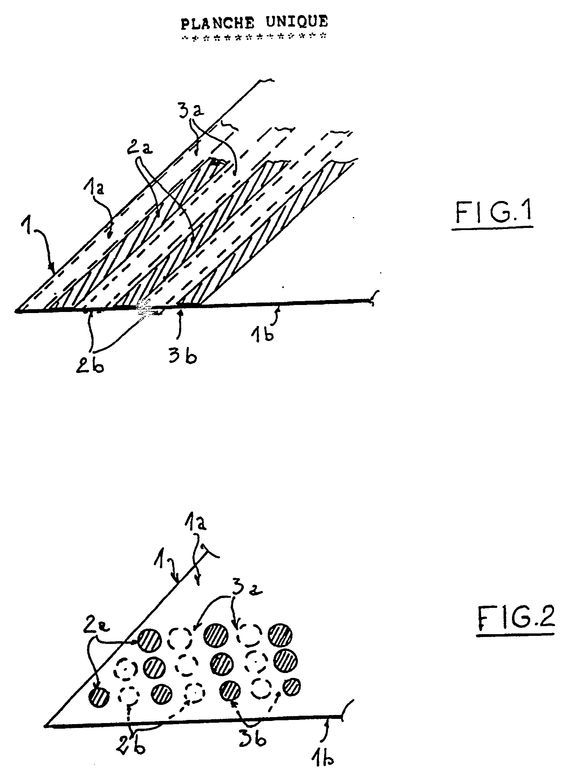

Dans l'exemple illustré par la figure 1, les zones adhésives et non-adhésives se présentent sous la forme de bandes parallèles soit à la longueur ou à la largeur du papier. Dans l'exemple illustré par la figure 2, les zones adhésives se présentent sous la forme de pastilles disposées en quinconce. Dans tous les cas, la surface adhésive de chaque face est inférieure à la moitié de la surface totale de la feuille, afin que les parties adhésives d'une face soient situées en correspondance avec les parties non adhésives de l'autre face en laissant subsister un léger vide entre ces parties.

S'il est avantageux que les zones adhésives se présentent sous la forme illustrée aux figures 1 et 2, c'est-à-dire sous la forme de surfaces définies, il pourrait être envisagé de réaliser de telles bandes adhésives sous la forme de lignes continues, de très faible largeur. Dans un tel cas, les lignes adhésives d'une face pourraient, lorsque le matériau est enroulé sur lui-même, recouper celles de l'autre face étant donné que le simple contact pratiquement ponctuel entre ces lignes permet de séparer les deux feuilles l'une de l'autre sans difficulté.

Exemple 1 :

On réalise un matériau conforme à l'invention en utilisant comme feuille support (1) un papier kraft pesant 40 g/m$^2$.

Sur les deux faces (1a) et (1b) de ce papier, on dépose, par pulvérisation ou impression une composition collante constituée d'une dispersion acrylique conventionnelle du type E1126 de la société "ROHM and HAAS" ou 619 de la même société et qui est utilisée de manière conventionnelle pour réaliser des rubans adhésifs.

Le dépôt de cette matière collante est réalisé conformément à l'invention de manière à ce que sur la face (1a), la colle se présente sous la forme de bandes parallèles (2a) ayant une largeur de 1 cm, séparées les unes des autres par une bande (3a) ne comportant pas de colle et ayant une largeur de 1,5 cm.

En revanche, sur la face (1b), le dépôt de colle est réalisé également sous la forme de bandes parallèles (2b), ayant la même largeur que les bandes (2a) précitées, mais qui sont quant à elles disposées en dessous de la zone (3a) ne comportant pas de colle de la face (1a).

On obtient donc un matériau qui présente une alternance de bandes collantes et non collantes sur ces deux faces décalées les unes par rapport aux autres et qui peut donc être enroulé sur lui-même sans qu'il soit nécessaire d'utiliser un intercalaire.

Un tel matériau peut être utilisé avec succès comme feuille de séparation lors de la palettisation de sacs. Il a été constaté que l'on empêchait ainsi tout glissement relatif des différentes couches les unes par rapport aux autres et que, par ailleurs et surtout, lors de l'utilisation des sacs, il n'y avait pas détérioration de leur surface.

Exemple 2 :

Toujours à partir d'un papier kraft pesant 40 g/m$^2$ et d'une colle acrylique similaire à celle de l'exemple précédent, on réalise un matériau conforme à l'invention dans lequel les parties collantes (2a, 2b) se présentent non sous la forme de bandes mais sous la forme de pastilles circulaires. De telles pastilles circulaires seront imprimées en utilisant un cache ajouré et en pulvérisant la colle. Elles ont un diamètre de 2 cm. et sont disposées en quinconce de telle sorte que les pastilles de la face (1a) soient disposées en regard des zones centrales de celles de la face (1b).

Un tel matériau peut également être utilisé dans tous les cas où l'on souhaite assurer un bon contact mutuel entre deux surfaces.

Bien entendu, l'invention n'est pas limitée aux exemples de réalisation mais elle en couvre toutes les variantes réalisées dans le même esprit.

**Revendications**

1. Matériau en feuille (1) utilisable notamment comme élément intercalaire entre deux surfaces de produits dont on souhaite empêcher tout glissement de l'un par rapport à l'autre, ledit matériau comportant sur ses deux faces une couche de matière adhésive déposée, sur chacune des faces (1a, 1b) de la feuille (1), sous la forme de motifs (2a, 2b) couvrant moins de 50% de la surface totale de la feuille, caractérisé en ce que les zones adhésives (2a) d'une face (1a) sont décalées par rapport aux zones adhésives (2b) réalisées sur l'autre face (1b) et ce, de telle sorte que lorsque les deux faces (1a, 1b) sont mises en contact l'une avec l'autre, lesdits motifs adhésifs (2a, 2b) puissent soit s'interpénétrer sans se toucher les uns par rapport aux autres, soit si deux zones adhésives sont en contact, elles ne le sont que de manière pratiquement ponctuelle de telle sorte que les deux couches puissent être séparées l'une de l'autre très facilement.

2. Matériau en feuille selon la revendication 1, caractérisé par le fait que la matière adhésive est répartie sur les deux faces (1a, 1b) de la feuille (1) sous la forme de bandes continues parallèles (2a, 2b), longitudinales ou transversales, l'espacement (3a) entre les bandes (2a) d'une face (1a) étant légèrement supérieur à la largeur des bandes adhésives (2b) de l'autre face (1b).

3. Matériau selon la revendication 1, caractérisé en ce que la matière adhésive est répartie sur chacune des faces (1a, 1b) de la feuille (1) sous la forme de motifs complémentaires (2a, 2b), les parties adhésives d'une face étant disposées sous les parties non adhésives de l'autre face.

4. Matériau selon la revendication 3, caractérisé en ce que le support sera constitué de tout matériau conventionnel, tel que par exemple du papier kraft.

## Patentansprüche

1. Blattmaterial (1), insbesondere benutzbar als Zwischenlageelement zwischen zwei Oberflächen von Produkten, deren Verschieben gegeneinander verhindert werden soll, welches auf seinen beiden Oberflächen eine Schicht von aufgetragenem Klebstoff aufweist, auf jeder der Oberflächen (1a, 1b) des Blattes (1) in Form von Motiven (2a, 2b), die weniger als 50% der Gesamtoberfläche des Blattes bedecken, dadurch gekennzeichnet, daß die Klebezonen (2a) einer Oberfläche (1a) gegenüber den auf der anderen Oberfläche (1b) angebrachten Klebezonen (2b) versetzt sind, und zwar derart, daß, wenn die beiden Oberflächen (1a, 1b) miteinander in Kontakt gebracht werden, die klebenden Motive (2a, 2b) entweder ineinandergreifen können, ohne sich gegenseitig zu berühren, oder wenn zwei Klebezonen in Kontakt sind, sie sich praktisch nur punktuell berühren, derart, daß die beiden Schichten sehr leicht voneinander getrennt werden können.

2. Blattmaterial nach Anspruch 1, dadurch gekennzeichnet, daß der Klebstoff auf den zwei Oberflächen (1a, 1b) des Blattes (1) in Form von kontinuierlichen, parallelen Streifen (2a, 2b) aufgebracht ist, in Längs- oder Querrichtung, wobei der Abstand (3a) zwischen den Streifen (2a) der einen Oberfläche (1a) leicht größer ist als die Breite der Klebestreifen (2b) der anderen Oberfläche (1b).

3. Material nach Anspruch 1, dadurch gekennzeichnet, daß der Klebstoff auf jeder der Oberflächen (1a, 1b) des Blattes (1) in Form von komplementären Motiven (2a, 2b) aufgebracht ist, wobei die klebenden Bereiche einer Oberfläche unter den nichtklebenden Bereichen der anderen Oberfläche angeordnet sind.

4. Material nach Anspruch 3, dadurch gekennzeichnet, daß der Träger aus allen konventionellen Materialien bestehen kann, wie beispielsweise Kraftpapier.

## Claims

1. Sheet material (1) utilisable in particular as an intercalated element between two surfaces of products which are intended to be prevented from slipping in relation to one another, said material being provided on both sides with a coat of an adhesive substance applied, on each side (1a, 1b) of the sheet (1), in the form of areas (2a, 2b) covering less than 50% of the total surface of the sheet, <u>characterized</u> in that the adhesive areas (2a) on one side (1a) are offset in relation to the adhesive areas (2b) on the other side (1b) in such a way that, when the two sides (1a, 1b) are placed in contact with one another, either said adhesive areas (2a, 2b) are able to interpenetrate without touching one another or, if two adhesive areas are in contact, said contact is virtually punctiform, so that the two coats may be separated from one another very easily.

2. Sheet material as claimed in claim 1, characterized in that the adhesive substance is applied to the two sides (1a, 1b) of the sheet (1) in the form of longitudinal or transverse parallel continuous strips (2a, 2b), the spacing (3a) between the strips (2a) on one side (1a) being slightly greater than the width of the adhesive strips (2b) on the other side (1b).

3. Material as claimed in claim 1, characterized in that the adhesive substance is applied to each of the sides (1a, 1b) of the sheet (1) in the form of additional areas (2a, 2b), the adhesive parts on one side being arranged beneath the non-adhesive parts on the other side.

4. Material as claimed in claim 3, characterised in that the substrate is formed of any conventional material such as, for example, kraft paper.

PLANCHE UNIQUE
* * * * * * * * * * * * * *

FIG.1

FIG.2